# EUROPÄISCHE PATENTSCHRIFT

(11) **EP 3 329 979 B1**
(45) Veröffentlichungstag und Bekanntmachung des Hinweises auf die Patenterteilung: **18.10.2023**
(21) Anmeldenummer: 17204321.8
(22) Anmeldetag: 31.10.2011
(51) Int. Cl.: B01D 29/21, B01D 29/96, B01D 35/153, B01D 35/16, B01D 35/147

(54) **FILTERGEHÄUSE UND FILTEREINSATZ**
FILTER HOUSING AND FILTER INSERT
BOITIER POUR UN FILTRE ET ÉLÉMENT FILTRANT

(30) Priorität: 04.11.2010 DE 102010043433; 12.11.2010 DE 102010043836
(43) Veröffentlichungstag der Anmeldung: 06.06.2018
(62) Teilanmeldung aus: 11788083.1
(73) Patentinhaber: Hengst SE, 48147 Münster (DE)
(72) Erfinder: ARDES, Wilhelm, 59387 Ascheberg (DE)
(74) Vertreter: Lohr, Jöstingmeier & Partner

(56) Entgegenhaltungen:
- EP-B1- 1 235 624
- WO-A1-2010/123344
- JP-A- 2004 136 203
- US-A1- 2010 044 295

## Beschreibung

### Technisches Gebiet

Die vorliegende Erfindung betrifft ein Filtergehäuse und einen Filtereinsatz für einen Filter für ein fluides Medium, insbesondere ÖI-, Wasser-, Kraftstoff- oder Luftfilter einer Brennkraftmaschine, mit dem Filtergehäuse und einem damit lösbar verbindbaren Deckel, wobei der Filtereinsatz austauschbar in dem Filtergehäuse aufnehmbar ist. Der Filtereinsatz besteht aus einem hohlzylindrischen Filterstoffkörper und zwei diesen stirnseitig einfassenden Stirnscheiben, von denen die eine Stirnscheibe eine zentrale Durchbrechung aufweist, und mit der durchbrochenen Stirnscheibe voran auf ein zentrales, einen Teil des Filtergehäuses bildendes Standrohr aufsteckbar ist. Das Standrohr hat einen axial verschiebbar geführten Sperrring, der mit einer in zum freien Ende des Standrohrs weisender Ausschubrichtung wirkenden Kraft vorbelastet ist. Der Sperrring ist in einer Ausschubstellung durch eine Riegeleinrichtung gegen ein Einschieben gesperrt. An dem Filtereinsatz sind geführte Entriegelungsmittel vorgesehen, die bei einem Aufstecken des Filtereinsatzes auf das Standrohr die Riegeleinrichtung in Entriegelungsrichtung betätigen und ein vollständiges Aufstecken des Filtereinsatzes freigeben. Die Entriegelungsmittel sind an dem Filtereinsatz angeordnet oder angeformt. Im in das Filtergehäuse eingebauten Zustand des Filtereinsatzes trennt eine an der Stirnscheibe vorgesehene Dichtung im Zusammenwirken mit einer Dichtfläche des Filtergehäuses eine Rohseite und eine Reinseite des Filters voneinander. Bei in Ausschubstellung befindlichem Sperrring und in axialer Anlage am Sperrring befindlichem Filtereinsatz ist die an der Stirnscheibe des Filtereinsatzes oder an dem Sperrring vorgesehene Dichtung in Ausschubrichtung von der zugehörigen Dichtfläche des Filtergehäuses axial entfernt und durch die Riegeleinrichtung in der von der Dichtfläche entfernten, nicht dichtenden Position gehalten. Bei in Einschubstellung befindlichem Filtereinsatz oder Sperrring bei entriegelter Riegeleinrichtung wirken die Dichtfläche und die Dichtung dichtend zusammen.

### Stand der Technik

An Filtereinsätze für Filter, insbesondere ÖI-, Wasser-, Kraftstoff- oder Luftfilter einer Brennkraftmaschine, werden zunehmend höhere Anforderungen gestellt, insbesondere hinsichtlich der Filterfeinheit und der Standzeit. Diese hohen Anforderungen können nur erfüllt werden, wenn geeignete Filtereinsätze hoher Qualität in die Filter eingebaut werden.

Ein Filtereinsatz und ein Filter, bei dem der Einbau eines nicht geeigneten Fremd-Filtereinsatzes im Rahmen einer Filterwartung mit einem Filtereinsatzwechsel unterbunden wird, ist aus EP 1 235 624 B1 bekannt. Ein auf einem Standrohr geführter Sperrring ist zugleich eine Ventilhülse, die axial auf dem Standrohr verschieblich und mit einer in Ventilschließrichtung wirkenden Kraft vorbelastet ist. In der Schließstellung des Ventils verrastet der Sperrring mittels nach radial innen weisender Sperrnasen an Sperrzungen mit dem Standrohr. Durch Aufstecken eines Filtereinsatzes mit passenden Entriegelungsmitteln wird die Verrastung des Sperrrings beziehungsweise der Ventilhülse mit dem Standrohr gelöst, indem die Sperrzungen nach radial außen verschwenkt werden. Der Sperrring wird dann durch den Filtereinsatz in Ventilöffnungsstellung verschoben und dort gehalten. Ein ungeeigneter Fremd-Filtereinsatz löst die Verrastung des Sperrrings am Standrohr nicht und der Filtereinsatz kann nicht vollständig auf das Standrohr aufgesteckt werden. Somit ist aufgrund des in Schließstellung befindlichen Ventilkörpers ein Betrieb des Filters nicht möglich; das gleiche gilt bei fehlendem Filtereinsatz. Der Sperrring ist mittels eines Dichtrings gegen das Standrohr abgedichtet. Die Stirnscheibe des Filtereinsatzes, die mit dem Sperrring zusammenwirkt, ist über einen weiteren Dichtring an der Stirnscheibe gegen den Sperrring abgedichtet.

Dieser bekannte Filtereinsatz erfüllt zwar die Anforderung, im Zusammenwirken mit dem zugehörigen Filter den Einbau eines ungeeigneten Fremd-Filtereinsatzes zu verhindern, jedoch ist dafür am Filtereinsatz eine Stirnscheibe mit relativ aufwändig gestalteten Entriegelungsmitteln nötig und es sind zwei Dichtstellen mit je einem Dichtring vorhanden, was nachteilig einen erhöhten Teile- und Montageaufwand mit sich bringt.

JP 2004 -136203 A schlägt eine Lösung vor, um die Montage eines an einem Sockel hängend zu montierenden Filtereinsatzes zu vereinfachen. Dazu hat der Filtereinsatz Verriegelungsmittel, die bei der Montage zunächst in komplementäre Ausnehmungen auf der Mantelfläche eines hängenden Rohrabschnitts eingreifen und in diesen verklemmen. Dadurch ist der Filtereinsatz provisorisch an dem Sockel hängend befestigt. Anschließend kann durch Anschrauben eines den Filtereinsatz nach unten und radial umgebenden Gehäuses an den Sockel der Filtereinsatz dauerhaft fixiert werden.

US2010/044295A offenbart eine Filteranordnung mit Filtereinsätzen. Die Filtereinsätze haben Endkappen, von denen die untere mit einer Durchbrechung voran auf eine an dem Boden eines Filtergehäuses befestigte Filterstütze aufgeschoben wird. Die Filterstütze hat einen Sperrring, der zum Lösen um die Filterlängsachse gedreht werden muss und erst danach axial in Richtung in Richtung des Bodens verschoben werden kann. Erst dadurch kann das Gehäuse geschlossen werden. Die Drehung wird beim Einsetzen des Filtereinsatzes durch an dessen oberen Endkappe angeordnete und von dort radial nach Innen weisende Entriegelungsstifte bewirkt. Ein Verdrehen der Entriegelungsstifte und damit des Filtereinsatzes um die Filterlängsachse wird durch axiale Schlitze in einem dem Sperrring radial umgebenden Sperrringträger verhindert. Bei der Montage müssen daher die Stifte zunächst fluchtend zu den Schlitzen ausgerichtet werden.

### Darstellung der Erfindung

Für die vorliegende Erfindung stellt sich daher die Aufgabe, einen Filtereinsatz der eingangs genannten Art zu schaffen, welcher so gestaltet ist, dass im Zusammenwirken mit einem zugehörigen Filter dessen Betrieb mit ungeeigneten Fremd-Filtereinsätzen und ohne Filtereinsatz unterbunden wird und welcher dabei eine einfache Konstruktion mit einer dennoch hohen Funktionszuverlässigkeit aufweist.

Die Lösung dieser Aufgabe gelingt erfindungsgemäß mit einem Filtergehäuse nach Anspruch 1 und einem Filtereinsatz nach Anspruch 2. Am Filtereinsatz sind Führungsmittel zum Zusammenwirken mit am Außenumfang des Standrohrs angeordneten Positionierführungsmitteln angeordnet, wobei mittels der Positionierführungsmittel beim Aufstecken des Filtereinsatzes auf das Standrohr die an dem Filtereinsatz angeordneten oder angeformten Entriegelungsmittel in Umfangsrichtung in eine für die Entriegelung der Riegeleinrichtung eingriffsgerechte Stellung zwangsführbar sind und dann der Filtereinsatz gegen Verdrehen in Umfangsrichtung sperrbar ist.

Mit dem erfindungsgemäßen Filtereinsatz wird vorteilhaft erreicht, dass auch ohne besondere Aufmerksamkeit einer Bedienungsperson und ohne die Notwendigkeit einer exakten manuellen Positionierung des Filtereinsatzes die für ein Entriegeln der Riegeleinrichtung richtige Einbauposition des Filtereinsatzes in dessen Umfangsrichtung beim Einbauen des Filtereinsatzes in den Filter bewirkt wird. Ein Betrieb des Filters mit einem ungeeigneten, die erforderlichen Positionierführungsmittel nicht aufweisenden Fremd-Filtereinsatz wird dabei zuverlässig verhindert, denn ein Fremd-Filtereinsatz kann infolge des Nicht-Lösens der Riegeleinrichtung nicht in seine Einbaulage gebracht werden, was ein Verschlie-ßen des Filtergehäuses mit dem zugehörigen Gehäusedeckel unterbindet. Somit wird mit technisch einfachen Mitteln die gewünschte Funktion mit einer hohen Zuverlässigkeit und mit günstigen Fertigungs- und Montagekosten erreicht.

Die Entriegelungsmittel sind an der die Durchbrechung aufweisenden Stirnscheibe des Filtereinsatzes angeordnet oder angeformt. Dabei werden ohnehin vorhandene Teile des Filtereinsatzes für die Anordnung der Entriegelungsmittel genutzt, was fertigungstechnisch günstig ist. Der Stützkörper kann beispielsweise ein hohlzylindrisches Stützgitter sein.

Bei vielen Filtern ist ein Filterumgehungsventil vorgesehen, welches eine Flüssigkeitsströmung unmittelbar von der Rohseite zur Reinseite des Filters unter Umgehung des Filterstoffkörpers erlaubt, wenn der Filterstoffkörper durch Schmutzpartikel verstopft ist. Eine besonders günstige Integration eines solchen Filterumgehungsventils wird erreicht, wenn, wie in einer erfindungsgemäßen Weiterbildung vorgeschlagen wird, zur Bildung eines Filterumgehungsventils eine Stirnscheibe des Filtereinsatzes einen Ventilsitz für einen filtergehäuseseitigen, mit einer in Ventilschließrichtung wirkenden Kraft vorbelasteten Ventilkörper aufweist. Vorteilhaft wird hierbei zur Realisierung des Filterumgehungsventils kein zusätzliches Ventilsitzbauteil benötigt, weil der Ventilsitz an der Stirnscheibe des Filtereinsatzes vorgesehen ist.

Bei Filtern ist es in vielen Fällen wünschenswert, im Rahmen einer Filterwartung eine Entleerung des Filtergehäuses zu ermöglichen, bevor der Filtereinsatz aus dem Filtergehäuse entnommen wird. Zu diesem Zweck ist bei dem erfindungsgemäßen Filtereinsatz vorgesehen, dass er an der vom Filterstoffkörper abgewandten Seite seiner einen Stirnscheibe einen axial vorstehenden, exzentrischen Verschlussdorn für einen exzentrisch im Boden eines zugehörigen Filtergehäuses des Filters angeordneten Entleerungskanal aufweist und dass am Innenumfang des Filtereinsatzes die Positionierführungsmittel zum Zusammenwirken mit den am Außenumfang des Standrohrs vorgesehenen Positionierführungsmitteln so angeordnet sind, dass beim Aufstecken des Filtereinsatzes auf das Standrohr der Filtereinsatz in Umfangsrichtung in eine für den Entleerungskanal eingriffsgerechte Stellung des Verschlussdorns zwangsgeführt wird. Mit dieser Ausführung des Filtereinsatzes wird bei dessen Einsetzen in das Filtergehäuse der im Boden des Filtergehäuses angeordnete Entleerungskanal zuverlässig verschlossen, weil gewährleistet ist, dass der Verschlussdorn passend zum Entleerungskanal positioniert wird. Dabei sind vorteilhaft die hier erwähnten Positionierführungsmittel für die Positionierung des Verschlussdorns zugleich durch die für die eingriffsgerechte Positionierung der Entriegelungsmittel relativ zu der Riegeleinrichtung schon vorgesehenen Positionierführungsmittel gebildet. Wenn der Deckel des Filtergehäuses im Rahmen einer Wartung abgenommen und der Filtereinsatz um einen für das Entfernen des Verschlussdorns aus dem Entleerungskanal ausreichenden Weg in Entnahmerichtung bewegt wird, läuft die im Filtergehäuse und im Filtereinsatz befindliche Flüssigkeit durch den Entleerungskanal ab. Somit kann ein weitestgehend von Flüssigkeit freier Filtereinsatz aus dem Filtergehäuse entnommen werden. Dabei kann, wie an sich bekannt, der Filtereinsatz mit dem Deckel verrastet sein, um beim Abnehmen des Deckels vom Filtergehäuse eine axiale Zugkraft auf den Filtereinsatz zu übertragen, die den Filtereinsatz zusammen mit dem Deckel in Entnahmerichtung bewegt.

Weiter ist für den Filtereinsatz zum Zweck der Verwendung in einem Filter, bei dem die Riegeleinrichtung durch mit dem Standrohr einstückig ausgeführte oder fest verbundene, in Radialrichtung bewegliche Sperrzungen mit je einer in Axialrichtung weisenden Sperrfläche gebildet ist und die Sperrzungen mit einer in Verriegelungsrichtung wirkenden Kraft vorbelastet sind und jeweils mit ihrer Sperrfläche den Sperrring in seiner Ausschubstellung gegen axiales Einschieben relativ zum Standrohr sperren, vorgesehen, dass durch die an dem Filtereinsatz angeordneten oder angeformten Entriegelungsmittel die Sperrzungen beim Aufstecken des Filtereinsatzes auf das Standrohr unmittelbar in radialer Richtung in ihre Entriegelungsstellung bewegbar sind. Aufgrund des unmittelbaren Einwirkens der Entriegelungsmittel auf die Sperrzungen wird eine besonders zuverlässige Funktion erreicht.

In diesbezüglicher weiterer Ausgestaltung ist bevorzugt vorgesehen, dass die an dem Filtereinsatz angeordneten oder angeformten Entriegelungsmittel durch radial in Entriegelungsrichtung der Sperrzungen vorragende Rippen gebildet sind, die beim Einsetzen des Filtereinsatzes in das Filtergehäuse für ein Verschwenken der Sperrzungen sorgen, um ein Einschieben des Sperrrings auf dem Standrohr freizugeben und so den Filtereinsatz vollständig in das Filtergehäuse einführen und die Dichtung und die zugehörige Dichtfläche in Eingriff miteinander bringen zu können.

In einer Ausgestaltung des Filtereinsatzes, in der er zur Verwendung in einem Filter mit einem zentralen, einen Teil des Filtergehäuses bildenden Standrohr vorgesehen ist, wobei auf dem Standrohr ein Sperrring axial verschiebbar geführt ist und wobei am Außenumfang des Sperrrings eine oder mehrere schiefe Ebenen angeordnet sind, ist vorgesehen, dass am Innenumfang des Filtereinsatzes eine oder mehrere mit der oder den schiefen Ebenen am Sperrring zusammenwirkende schiefe Ebenen angeordnet sind und dass, wenn der Filtereinsatz auf das Standrohr aufgesetzt wird, bei einem axialen Verschieben des Filtereinsatzes der Sperrring in eine begrenzte Rotation in Entriegelungsrichtung versetzt wird. Die hier am Filtereinsatz vorgesehene schiefe Ebene oder vorgesehenen schiefen Ebenen sind ein einfaches und zuverlässiges Mittel zum Erzeugen der gewünschten begrenzten Drehbewegung des Sperrrings zum Zweck seiner Entriegelung.

Unterseitig von der in Einbaulage des Filtereinsatzes unteren Stirnscheibe erstreckt sich ein ringförmiger Fortsatz nach unten, an dessen unterem Ende eine Dichtung, vorzugsweise ein Radialdichtring, angebracht ist. Dadurch, dass die Dichtung dem Filtereinsatz zugeordnet ist, wird mit jedem Filtereinsatzwechsel bei einer Wartung des Filters die Dichtung erneuert, was zu einer zuverlässigen Funktion beiträgt.

Schließlich ist erfindungsgemäß vorgesehen, dass am Innenumfang des Fortsatzes zum einen die Positionierführungsmittel, die zum Zusammenwirken mit den Positionierführungsmitteln am Standrohr dienen, und zum anderen die schiefen Ebenen, die zum Zusammenwirken mit den schiefen Ebenen am Sperrring dienen, liegen.

### Beschreibung der Zeichnungen

Im Folgenden werden Filtergehäuse und Filtereinsätze anhand einer Zeichnung erläutert. Nicht alle in den Figuren der Zeichnung gezeigten Filtergehäuse oder Filtereinsätze fallen unter die entsprechenden Patentansprüche, jedoch sind auch solche zum besseren Verständnis der Erfindung hilfreich. Es zeigt:
- Figur 1: einen Filtereinsatz in einer ersten nicht beanspruchten Ausführung, der teilweise in einen Filter mit einem geöffneten Filtergehäuse und mit einem Deckel eingesetzt ist, im Längsschnitt,
- Figur 2: den Filtereinsatz aus Figur 1 in einem weiter in den Filter eingeführten Zustand, im Längsschnitt,
- Figur 3: den Filtereinsatz aus Figur 1 in seinem vollständig in dem Filter eingeführten Zustand, mit am Filtergehäuse angebrachtem Deckel, im Längsschnitt,
- Figur 4: den Filtereinsatz gemäß Figur 1 bis 3 als Einzelteil, in Ansicht,
- Figur 5: den Filtereinsatz in einer zweiten nicht beanspruchten Ausführung, in einem in einen Filter eingebauten Zustand, in einem ersten Teil-Längsschnitt durch einen unteren Filterbereich,
- Figur 6: den Filtereinsatz nach Figur 5 in seinem in den Filter eingebauten Zustand, in einem zweiten Teil-Längsschnitt durch einen unteren Filterbereich,
- Figur 7: ein Beispiel für einen in den Filter nach Figur 5 und 6 teilweise eingesetzten, nicht passenden Fremd-Filtereinsatz, im Längsschnitt,
- Figur 8: den unteren Teil eines Filtereinsatzes mit integrierten Entriegelungsmitteln, in Ansicht schräg von unten,
- Figur 9: den Filtereinsatz in einer dritten Ausführung, in einem teilweise in einen Filter eingeführten Zustand, in einem Teil-Längsschnitt durch einen unteren Filterbereich,
- Figur 10: den Filtereinsatz aus Figur 9 in einem weiter in den Filter eingeführten Zustand, in einem Teil-Längsschnitt durch den unteren Filterbereich,
- Figur 11: den Filtereinsatz aus Figur 9 und 10 in einem noch weiter in den Filter eingeführten Zustand, in einem Teil-Längsschnitt durch den unteren Filterbereich,
- Figur 12: den Filtereinsatz aus Figur 9 bis 11 in einem nochmals weiter in den Filter eingeführten Zustand, in einem Teil-Längsschnitt durch den unteren Filterbereich,
- Figur 13: den Filtereinsatz aus Figur 9 bis 12 in einem nochmals weiter in den Filter eingeführten Zustand, in einem Teil-Längsschnitt durch den unteren Filterbereich,
- Figur 14: den Filtereinsatz aus Figur 9 bis 13 in einem vollständig in den Filter eingeführten Zustand, in einem ersten Teil-Längsschnitt durch den unteren Filterbereich,
- Figur 15: den Filtereinsatz aus Figur 14 in seinem vollständig in den Filter eingeführten Zustand, in einem zweiten Teil-Längsschnitt durch den unteren Filterbereich,
- Figur 16: den Filtereinsatz aus Figur 14 und 15 in seinem vollständig in den Filter eingeführten Zustand, in einem dritten Teil-Längsschnitt durch den unteren Filterbereich,
- Figur 17: ein Beispiel für einen in den Filter nach Figur 9 bis 16 teilweise eingesetzten, nicht passenden Fremd-Filtereinsatz, im Längsschnitt, und
- Figur 18: einen unteren Teil des Filtereinsatzes gemäß Figur 9 bis 16, in Ansicht schräg von unten.

In der folgenden Figurenbeschreibung sind gleiche Teile in den verschiedenen Zeichnungsfiguren stets mit den gleichen Bezugszeichen versehen, sodass nicht zu jeder Zeichnungsfigur alle Bezugszeichen erneut erläutert werden müssen.

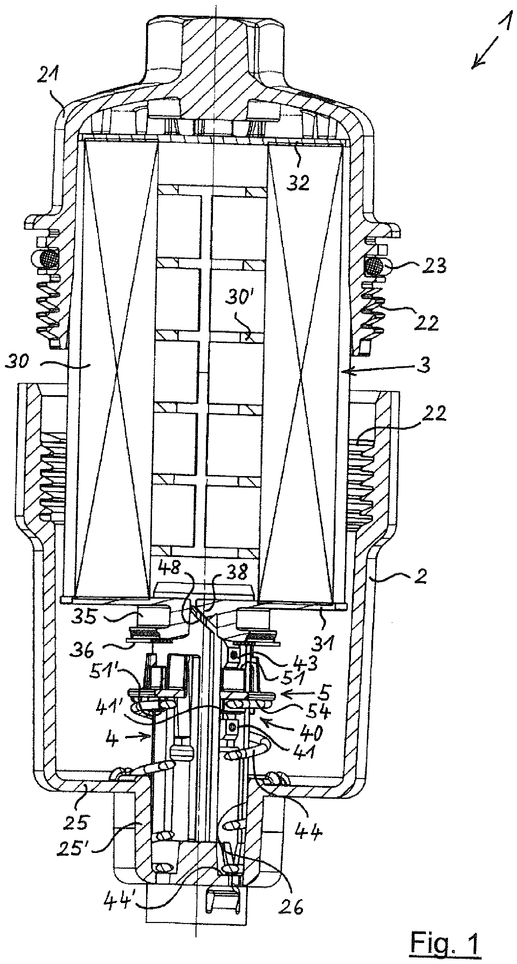

Figur 1 zeigt einen Filtereinsatz 3 in der ersten Ausführung, der teilweise in einen Filter 1 mit einem geöffneten Filtergehäuse 2 und mit einem Deckel 21 eingesetzt ist, im Längsschnitt.

Das Filtergehäuse 2 zur Aufnahme des Filtereinsatzes 3 ist becherförmig mit einem Boden 25, in dessen Zentrum ein sich nach unten fortsetzender, hohlzylindrische Bodenteil 25' liegt. Der Innenumfang dieses Bodenteils 25' bildet eine Dichtfläche 26 für eine Dichtung 36 des hier noch nicht eingebauten Filtereinsatzes 3. An seinem oberen Ende besitzt das Gehäuse 2 ein Gewinde 22 zur Verschraubung mit dem hier abgenommenen Deckel 21. Zentral im Inneren des Filtergehäuses 2 ist ein Standrohr 4 angeordnet, das mit seinem unteren Ende mit dem Filtergehäuse 2 verbunden ist und sich von dort nach oben bis etwa zur halben Höhe des Filtergehäuses 2 erstreckt.

Auf dem Standrohr 4 ist ein Sperrring 5 in Axialrichtung begrenzt verschieblich geführt. In seiner nach oben weisenden Ausschubrichtung ist der Sperrring 5 durch die Kraft einer Feder 44 vorbelastet, die mit ihrem unteren Ende an einer Federabstützung 44' im hohlzylindrischen Bodenteil 25' und mit ihrem oberen Ende an einer Federabstützung 54 am Sperrring 5 abgestützt ist. Somit liegt in Figur 1 der Sperrring 5 durch die Wirkung der Feder 44 in seiner Ausschubstellung. In dieser Ausschubstellung liegt eine Oberkante 51 des Sperrrings 5 an einem am Standrohr 4 ausgebildeten Anschlag, hier in Form von Nocken 43, an.

Das Standrohr 4 weist eine Riegeleinrichtung 40 auf, mit welcher der Sperrring 5 in seiner Ausschubstellung sperrbar ist. Die Riegeleinrichtung 40 umfasst hier zwei federnde Sperrzungen 41, die in Axialrichtung verlaufen und einstückig mit dem Standrohr 4 ausgebildet sind. Jeweils nahe dem unteren Ende jeder Sperrzunge 41 weist diese jeweils an ihrer Außenseite eine in Axialrichtung nach oben weisenden Sperrfläche 41' auf, die unmittelbar unterhalb einer Unterkante 51' des Sperrrings 5 liegt. Somit ist der Sperrring 5 an einem Einschieben nach unten gehindert.

Der Filtereinsatz 3 besteht aus einem hohlzylindrischen Filterstoffkörper 30, zum Beispiel aus einem zickzackförmig gefalteten Filterpapier, der stirnseitig von einer unteren Stirnscheibe 31 und einer oberen Stirnscheibe 32 eingefasst ist. In Inneren des Filterstoffkörpers 30 ist zu dessen Unterstützung gegen ein Kollabieren im Betrieb ein hohlzylindrisches Stützgitter 30' angeordnet. Die untere Stirnscheibe 31 ist in ihrem Zentrum durchbrochen ausgeführt und auf das Standrohr 4 aufgesteckt.

Unterseitig erstreckt sich von der unteren Stirnscheibe 31 ein ringförmiger Fortsatz 35 nach unten, an dessen unterem Ende eine Dichtung 36, hier ein Radialdichtring, angebracht ist. Um den Filtereinsatz 3 einbauen zu können, besitzt dieser hier nicht sichtbaren Entriegelungsmittel, mit denen die Riegeleinrichtung 40 entriegelt werden kann. Um die Entriegelungsmittel in eine eingriffsgerechte Position für die Sperrzungen 41 zu bringen, sind am Außenumfang des Standrohrs 4 und am Innenumfang der unteren Stirnscheibe 31 zusammenwirkende Positionierführungsmittel 48 und 38 angeordnet. Diese führen den Filtereinsatz 3 in Umfangsrichtung in eine Position, in der die Entriegelungsmittel passend zum den Sperrzungen 41 liegen. Die Entriegelungsmittel wirken dann mit den Nocken 43 an den Sperrzungen 41 zusammen, um die Sperrzungen 41 in Radialrichtung nach innen zu verschwenken und so die Riegeleinrichtung 40 zu entriegeln.

Oben in Figur 1 ist der Deckel 21 des Filtergehäuses 2 erkennbar, der an seinem unteren Rand ebenfalls ein Gewinde 22 zur Verschraubung mit dem Filtergehäuse 2 aufweist. Mittels einer Dichtung 23 werden dann das Filtergehäuse 2 und der Deckel 21 gegeneinander flüssigkeitsdicht abgedichtet.

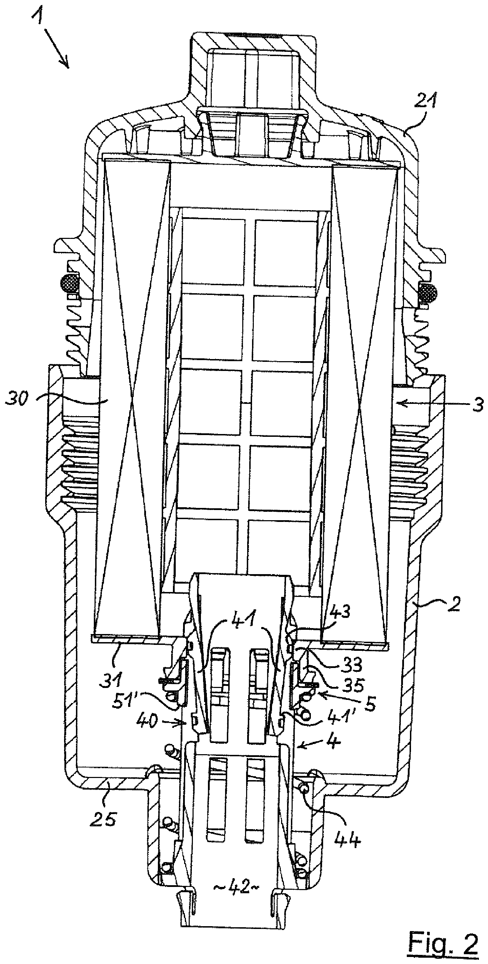

Figur 2 zeigt den Filtereinsatz 3 aus Figur 1 in einem weiter in den Filter 1 eingeführten Zustand, wieder im Längsschnitt. Radial innen an der unteren Stirnscheibe 31 des Filtereinsatzes 3 sind nun die hier rippenförmigen Entriegelungsmittel 33 erkennbar, die in dem Zustand gemäß Figur 2 gerade entriegelnd mit den Nocken 43 der Sperrzungen 41 zusammenwirken. Die Sperrzungen 41 befindet sich nun in ihrer nach radial innen verschwenken Lösestellung, in der die Sperrflächen 41' radial innen von der Unterkante 51' des Sperrrings 5 liegen. Somit ist eine Verschiebung des Sperrrings 5 nach unten gegen die Kraft der Feder 44 freigegeben.

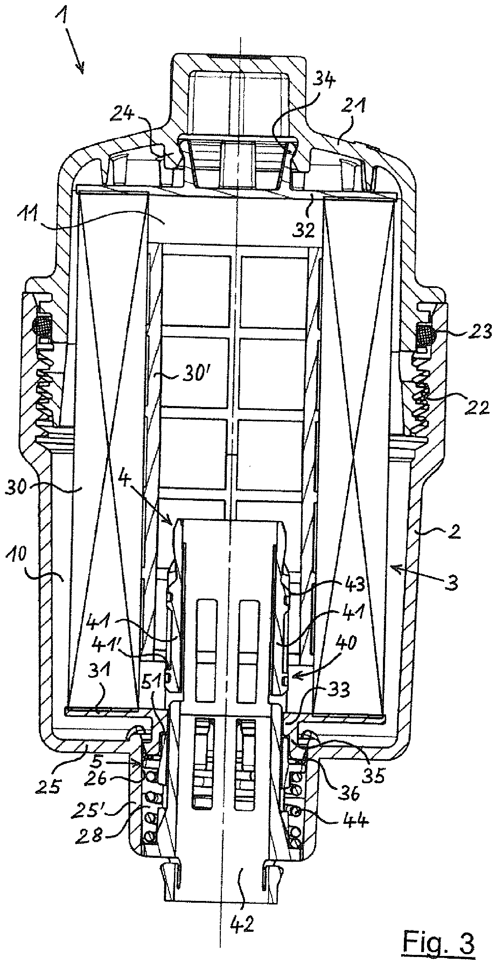

Figur 3 zeigt den Filtereinsatz 3 aus Figur 1 und 2 in seinem vollständig in den Filter 1 eingeführten Zustand, mit am Filtergehäuse 2 angebrachtem Deckel 21, im Längsschnitt.

Die Entriegelungsmittel 33 sind nun über die Sperrzungen 41 hinweg nach unten verschoben, wodurch die federnden Sperrzungen 41 in ihre Ausgangslage zurückgekehrt sind. Die untere Stirnscheibe 31 des Filtereinsatzes 3 liegt nun in einem geringen Abstand über dem Boden 25 des Filtergehäuses 2. Der hohlzylindrische Bodenteil 25' und der untere Teil des Standrohrs 4 bilden einen Ringspalt 28, in den hinein nun der Sperrring 5 verschoben ist und der unterhalb des Sperrrings 5 auch die Feder 44 aufnimmt.

Weiterhin ragt der ringförmige Fortsatz 35, der von der Unterseite der unteren Stirnscheibe 31 ausgeht und der die Dichtung 36 trägt, oberhalb des Sperrrings 5 in den Ringspalt 28 hinein, wodurch die Dichtung 36 nun in dichtender Anlage an der Dichtfläche 26 liegt. Auf diese Weise wird eine Rohseite 10 des Filters 1 von einer Reinseite 11 flüssigkeitsdicht getrennt und der Filter 1 ist betriebsbereit. Im Betrieb strömt eine zu filternder Flüssigkeit über einen nicht dargestellten Einlass auf die Rohseite 10 des Filters 1, durchströmt den Filterstoffkörper 30 in Radialrichtung von außen nach innen und verlässt dann den Filter 1 durch einen im hohlen Inneren des Standrohrs 4 ausgebildeten Flüssigkeitsablaufkanal 42. Das Stützgitter 30' schützt dabei den Filterstoffkörper 30 gegen ein Kollabieren in Radialrichtung nach innen.

Ganz oben in Figur 3 ist erkennbar, dass der Filtereinsatz 3 an der Oberseite seiner oberen Stirnscheibe 32 nach oben vorragende Rastzungen 34 aufweist, die mit passend angeordneten Rastzungen 24 an der Unterseite des Deckels 21 in Rasteingriff stehen. Über diesen Rasteingriff kann eine axiale Zugkraft von dem Deckel 21 auf den Filtereinsatz 3 ausgeübt werden, wenn der Deckel 21 vom Filtergehäuse 2 abgeschraubt wird. Dadurch nimmt der Deckel 21 den Filtereinsatz 3 mit.

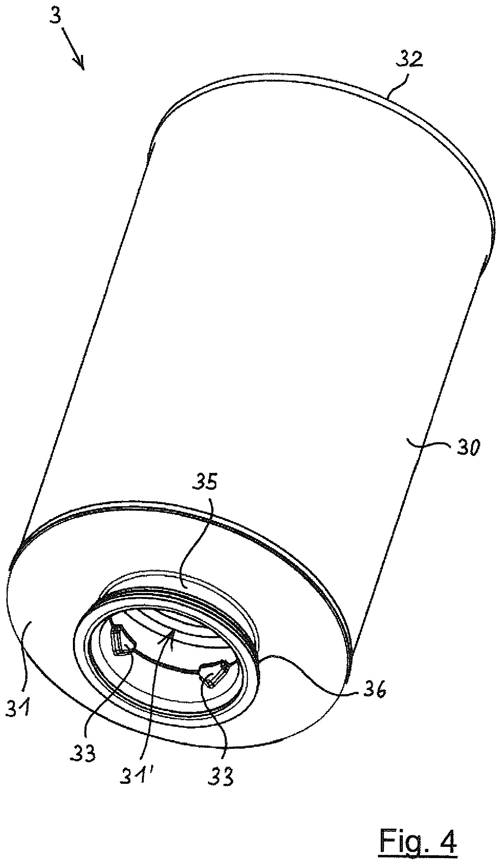

Figur 4 zeigt den Filtereinsatz 3 gemäß Figur 1 bis 3 als Einzelteil in Ansicht. Unten und oben sind die beiden Stirnscheiben 31 und 32 sichtbar, zwischen denen der Filterstoffkörper 30 angeordnet ist. Die untere Stirnscheibe 31 besitzt zentral die Durchbrechung 31', mit der sie auf das Standrohr 4 aufgesteckt werden kann. Von der unteren Stirnscheibe 31 erstreckt sich der die Durchbrechung 31' umgebende ringförmiger Fortsatz 35 nach unten, der an seinem unteren Ende die nach radial außen weisende Dichtung 36 trägt. Am Innenumfang des ringförmigen Fortsatzes 35 sind die Entriegelungsmittel 33 sichtbar, die zum Lösen der Riegeleinrichtung 40, konkret zum Verschwenken der Sperrzungen 41 in Löserichtung radial nach innen, dienen, wenn der Filtereinsatz 3 auf das Standrohr 4 aufgesteckt wird.

Bei dem vorstehend beschriebenen Ausführungsbeispiel umfasst die von den Entriegelungsmitteln 33 des Filtereinsatzes 3 in Löserichtung beaufschlagbare Riegeleinrichtung 40 mehrere federnde Sperrzungen 41. Nachfolgend werden Ausführungsbeispiele beschrieben, bei denen die Riegeleinrichtung 40 anders ausgeführt ist.

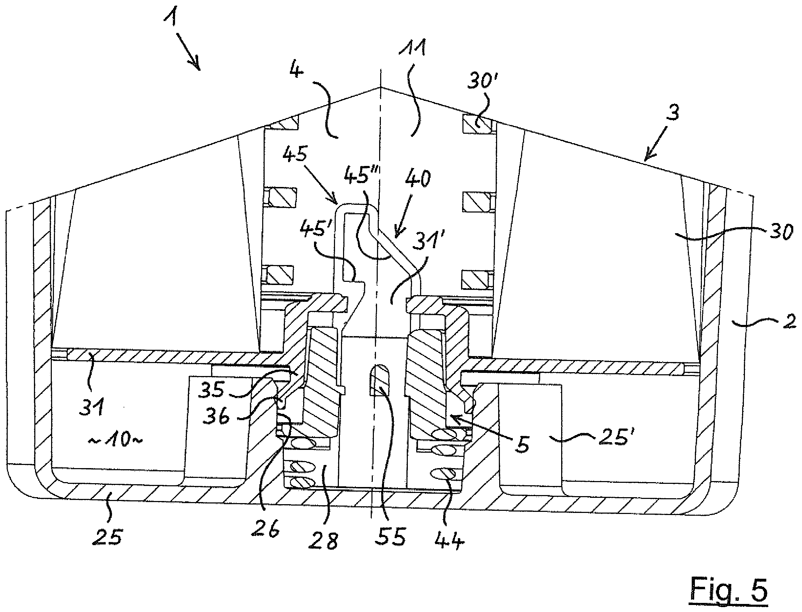

Figur 5 zeigt den Filtereinsatz 3 in der zweiten Ausführung, in einem in einen Filter 1 eingebauten Zustand, in einem ersten Teil-Längsschnitt durch einen unteren Filterbereich.

Außen in Figur 5 ist ein Teil des Filtergehäuses 2 mit dem Boden 25 erkennbar. Im Zentrum des Bodens 25 liegt der hohlzylindrische Bodenteil 25', dessen Innenumfang die Dichtfläche 26 bildet. Im Zentrum des Gehäuses 2 ist das Standrohr 4 angeordnet. Auf dem Standrohr 4 ist der Sperrring 5 in Axialrichtung verschieblich angeordnet. Zusätzlich ist hier der Sperrring 5 relativ zum Standrohr 4 auch in Umfangsrichtung begrenzt verdrehbar. Auch hier ist der Sperrring 5 mit einer in dessen Ausschubrichtung, das heißt gemäß Figur 5 nach oben, wirkenden Kraft vorbelastet, die auch hier durch eine Schraubenfeder 44 erzeugt wird. Wenn noch kein Filtereinsatz 3 in das Gehäuse 2 eingesetzt ist, sorgt die Feder 44 dafür, dass der Sperrring 5 seine Ausschubstellung einnimmt. Außerdem ist in der Ausschubstellung des Sperrrings 5 dieser gegen ein Einschieben in Axialrichtung, das heißt nach unten, gesperrt. Dies wird erreicht durch eine einen Teil der Riegeleinrichtung 40 bildende Führungskontur 45 am Außenumfang des Standrohrs 4.

Die Führungskontur 45 weist eine nach oben gerichtete Sperrstufe 45' auf, die in einem Zustand mit zunächst nur teilweise in das Filtergehäuse 2 eingeführtem Filtereinsatz 3 in Axialrichtung genau unterhalb einer Führungsnase 55 am Innenumfang des Sperrrings 5 liegt. Wenn eine von oben nach unten nur in Axialrichtung wirkende Kraft auf den Sperrring 5 ausgeübt wird, gelangt dessen Führungsnase 55 auf die Sperrstufe 45', wodurch ein weiteres axiales Verschieben unterbunden ist.

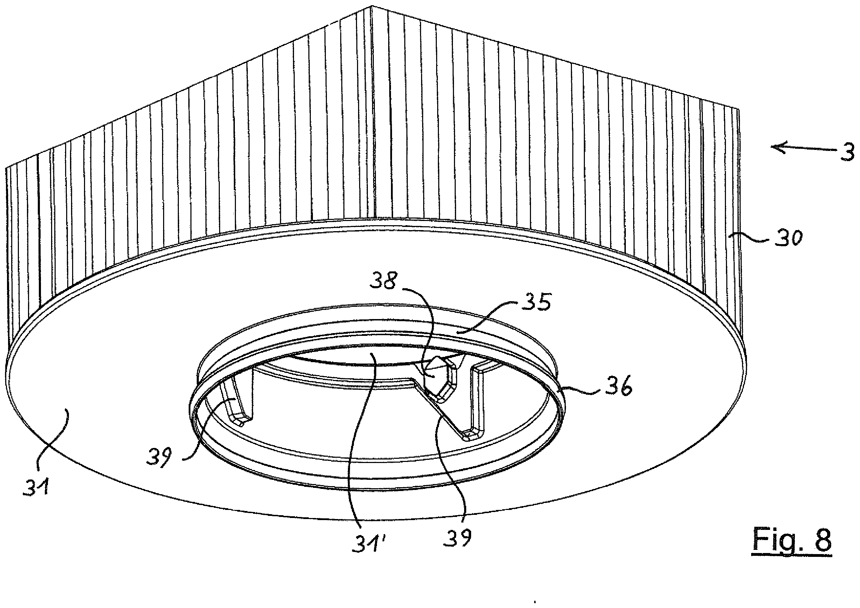

Zum Lösen der Riegeleinrichtung 40 muss der Sperrring 5 hier zusätzlich zu seiner axialen Bewegung nach unten auch eine Drehbewegung ausführen, damit die Führungsnase 55 an der Sperrstufe 45' vorbei bewegt werden kann. Hierzu sind am Außenumfang des Sperrrings 5 mehrere in Figur 5 nicht sichtbare schiefe Ebenen angeformt. Diese schiefen Ebenen wirken mit schiefen Ebenen 39 an Filtereinsatz 3 zusammen (vergleiche Figur 8), wenn der Filtereinsatz 3 auf das Standrohr 4 aufgesetzt wird, und sorgen dafür, dass die axiale Bewegung des Filtereinsatzes 3 eine begrenzte Drehbewegung des Sperrrings 5 in Entriegelungsrichtung erzeugt. Die Führungsnase 55 gelangt so innerhalb der Führungskontur 45 in eine Position, in der sie in Umfangsrichtung gegen die Sperrstufe 45' versetzt ist, wonach dann eine weitere Bewegung des Sperrrings 5 in Axialrichtung nach unten frei ist.

In Figur 5 ist der Filtereinsatz 3 vollständig in den Filter 1 eingebaut und in einem ersten Längsschnitt dargestellt, der vor der Mittelachse des Filtergehäuses 2 liegt. Der Sperrring 5 ist in seine Einschubstellung verschoben und die Führungsnase 55 des Sperrrings 5 befindet sich in einer Position axial unterhalb der Sperrstufe 45' sowie in Umfangsrichtung zur Sperrstufe 45' versetzt. Die Feder 44 ist nun komprimiert und wird über den Sperrring 5 mittels des Filtereinsatzes 3 in diesem Zustand gehalten. Ein Verschieben des Filtereinsatzes 3 zurück nach oben ist durch einen auf das Gehäuse 2 aufgesetzten, hier nicht dargestellten Deckel unterbunden.

Der ringförmige Fortsatz 35 an der Unterseite der unteren Stirnscheibe 31 ragt zusammen mit der von ihm getragenen Dichtung 36 in den hohlzylindrischen Bodenteil 25' des Bodens 25 des Filtergehäuses 2 hinein und die Dichtung 36 liegt in dichtender Anlage an der Dichtfläche 26.

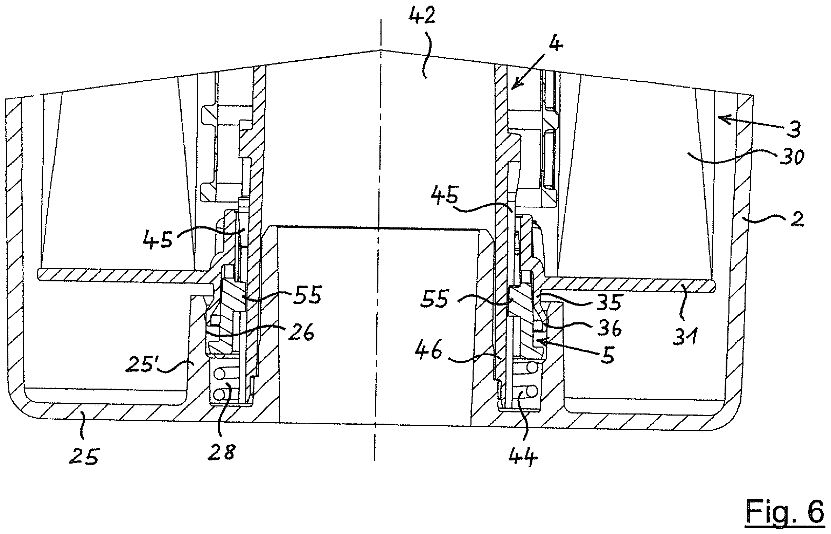

Die Figur 6 zeigt den Filtereinsatz 3 nach Figur 5 ebenfalls in seinem in den Filter1 eingebauten Zustand, nun in einem zweiten Teil-Längsschnitt durch einen unteren Filterbereich, wobei der zweite Längsschnitt durch die Mittelachse des Filtergehäuses 2 verläuft. Auch hier ist erkennbar, dass nun der Sperrring 5 und unter diesem die Feder 44 in dem Ringspalt 28 zwischen dem hohlzylindrischen Bodenteil 24' und dem unteren Teil des Standrohrs 4 liegen. Auch ist wieder sichtbar, dass der ringförmige Fortsatz 35 der unteren Stirnscheibe 31 mit der Dichtung 36 in den Ringspalt 28 eingreift, wodurch die Dichtung 36 in dichtender Anlage an der Dichtfläche 26 liegt.

Radial innen am Sperrring 5 sind dessen Führungsnasen 55 sichtbar, die in der Führungskontur 45 am Außenumfang des Standrohrs 4 geführt sind.

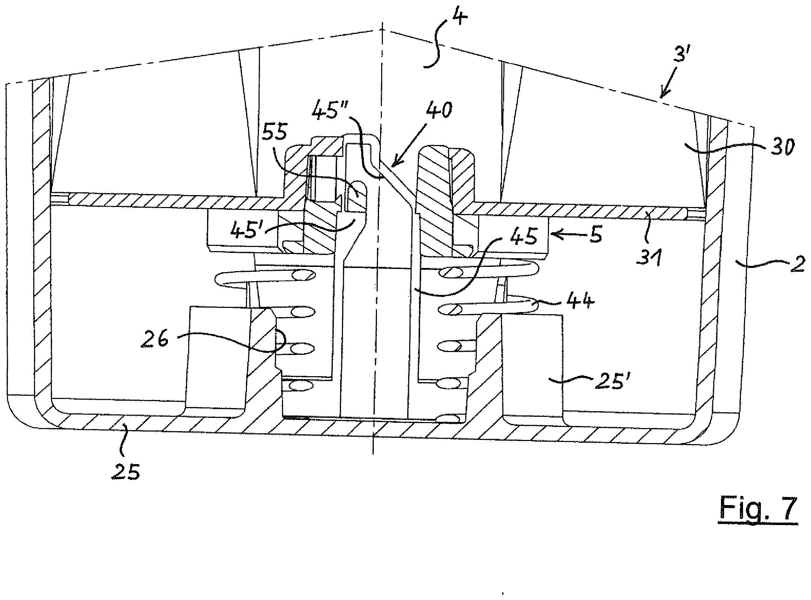

Figur 7 zeigt ein Beispiel für einen in den Filter 1 nach Figur 5 und 6 teilweise eingesetzten, nicht passenden Fremd-Filtereinsatz 3', im Längsschnitt. Der Fremd-Filtereinsatz 3' unterscheidet sich von dem Filtereinsatz 3 dadurch, dass er die für das Lösen der Riegeleinrichtung 40 erforderlichen Entriegelungsmittel 33 nicht aufweist. Dies führt dazu, dass beim Einführen des Filtereinsatzes 3' in das Filtergehäuse 2 die untere Stirnscheibe 31 den Sperrring 5 nur rein axial so weit nach unten bewegen kann, bis die Führungsnase 55 des Sperrrings 5 auf die Sperrstufe 45' der Führungskontur 45 auf dem Außenumfang des Standrohrs 4 auftrifft. Ein weiteres Einschieben des Filtereinsatzes 3' in das Filtergehäuse 2 ist nun nicht mehr möglich. Eine flüssigkeitsdichte Trennung in eine Rohseite und Reinseite des Filtergehäuses 2 wird nicht erreicht. Auch ein Anbringen des Deckels am Filtergehäuse 2 ist ausgeschlossen, weil der Filtereinsatz 3' oberseitig noch zu weit aus dem Filtergehäuse 2 herausragt.

Figur 8 zeigt den unteren Teil des Filtereinsatzes 3 mit der unteren Stirnscheibe 31 in Ansicht schräg von unten. Die untere Stirnscheibe 31 schließt den Filterstoffkörper 30 an seiner unteren Stirnseite ab. Im Zentrum der Stirnscheibe 31 liegt die Durchbrechung 31', welche von dem ringförmigen Fortsatz 35 umgeben ist. An seinem axial unteren Ende trägt der Fortsatz 35 die nach radial außen weisende Dichtung 36.

An Innenumfang des Fortsatzes 35 liegen zum einen die Positionierführungsmittel 38, die zum Zusammenwirken mit den Positionierführungsmitteln 48 am Standrohr 4 dienen, und zum anderen die schiefen Ebenen 39, die zum Zusammenwirken mit den zugehörigen schiefen Ebenen am Sperrring dienen.

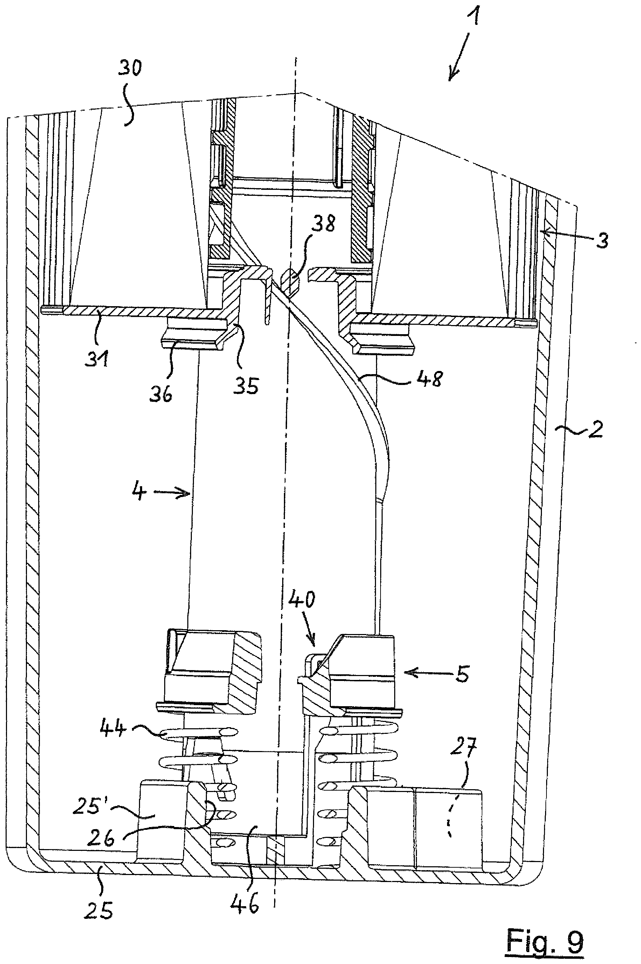

Die Figuren 9 bis 16 zeigen den Filtereinsatz 3 in der dritten Ausführung, in verschiedenen Einführpositionen relativ zum Filter 1 und in verschiedenen Teil-Längsschnitten durch einen unteren Filterbereich. Für die dritte Ausführung des Filtereinsatzes 3 ist charakteristisch, dass sie für ein Zusammenwirken mit einem Filtergehäuse 2 ausgebildet ist, welches zusätzlich einen Entleerungskanal 27 aufweist, der in einer exzentrischen Lage im Boden 25 des Gehäuses 2 angeordnet ist. Der Entleerungskanal 27 dient dazu, beim Herausziehen des Filtereinsatzes 3 einen Weg zur Entleerung des Filtergehäuses 2 von Flüssigkeit freizugeben, damit ein möglichst von Flüssigkeit freier Filtereinsatz 3 aus dem Filtergehäuse 2 entnommen werden kann. Dabei ist es erforderlich, dass im Betrieb des Filters 1 der Entleerungskanal 27 verschlossen ist.

Die Figur 9 zeigt den Filtereinsatz 3 in der dritten Ausführung in einem Längsschnitt durch den unteren Bereich des Filters 1, wobei der Filtereinsatz 3 erst teilweise eingeführt ist, im Längsschnitt. Die äußere Begrenzung des Filters 1 bildet wieder das becherförmige Filtergehäuse 2 mit dem Boden 25 und dessen hohlzylindrischem Bodenteil 25'. Zentral im Filtergehäuse 2 ist wieder ein Standrohr 4 angeordnet, das an seinem unteren Ende 46 mit dem Filtergehäuse 2 verbunden ist.

Auf dem unteren Teil des Standrohrs 4 ist wieder der Sperrring 5 angeordnet, der, ebenso wie die zugehörige Riegeleinrichtung 40, dem zuvor beschriebenen Ausführungsbeispiel entspricht. Unter dem Sperrring 5 liegt wieder die Feder 44, die auch hier als Schrauben-Druckfeder ausgeführt ist.

Im oberen Teil der Figur 9 ist der untere Teil des Filtereinsatzes 3 zu Beginn seines Einführens in das Filtergehäuse 2 sichtbar. Auch hier hat der Filtereinsatz 3 einen Filterstoffkörper 30, dessen untere Stirnseite von der Stirnscheibe 31 abgedeckt ist. Von der Stirnscheibe 31 erstreckt sich konzentrisch der ringförmige Fortsatz 35 mit der radial nach außen weisenden Dichtung 36 nach unten.

Auf dem Außenumfang des Standrohrs 4 verläuft das Positionierführungsmittel 48 in Form einer von oben nach unten gesehen zunächst schräg verlaufenden Wendel, die dann weiter unten in einen axialen Verlauf übergeht. Mit dem Positionierführungsmittel 48 wirkt das am Filtereinsatz 3 vorhandene Positionierführungsmittel 38 zusammen, indem beim Einführen des Filtereinsatzes 3 dessen Positionierführungsmittel 38 auf dem Positionierführungsmittel 48 entlang gleitet. Durch die Wendelform des oberen Teils des Positionierführungsmittels 48 wird der Filtereinsatz 3 bei seiner Bewegung nach unten zugleich in Umfangsrichtung verdreht, was dazu dient, den Filtereinsatz 3 in eine gewünschte Verdrehstellung relativ zum Filtergehäuse 2 und zum Entleerungskanal 27 zu bringen, bevor der Filtereinsatz 3 seine endgültige Einbaulage erreicht.

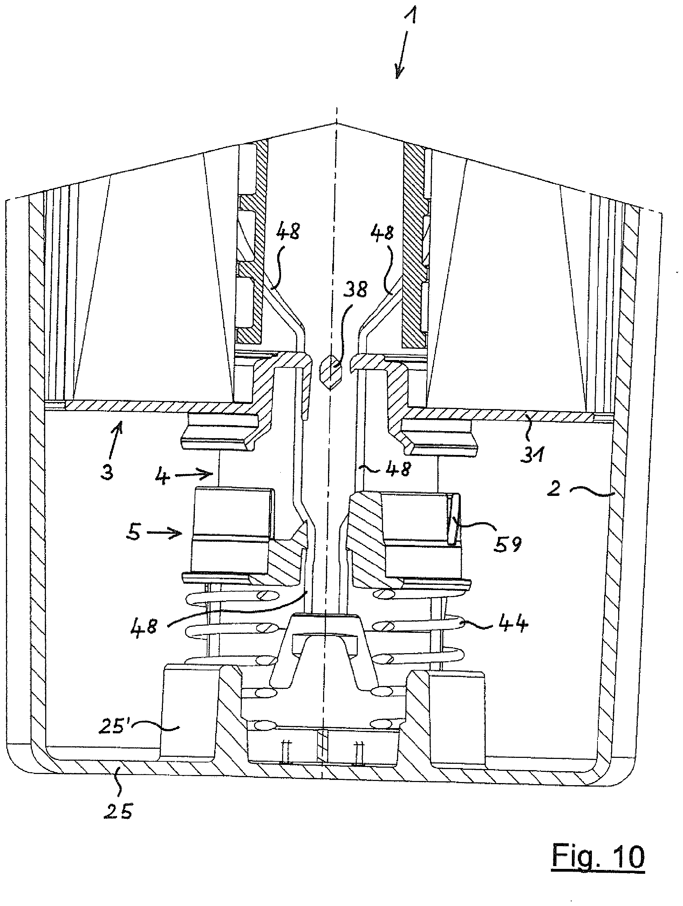

Figur 10 zeigt den Filtereinsatz 3 aus Figur 9 in einem weiter in das Filtergehäuse 2 eingeführten Zustand, in einem weiteren, gegenüber Figur 10 verdrehten Längsschnitt. Der Schnitt verläuft nun so, dass die auf dem Außenumfang des Standrohrs 4 angeordneten Positionierführungsmittel 48 dem Betrachter zugewandt sind. Zwischen den Positionierführungsmitteln 48 liegt das Positionierführungsmittel 38 des Filtereinsatzes 3. Der Sperrring 5 befindet sich nach wie vor in seiner Ausschubstellung, da die untere Stirnscheibe 31 des Filtereinsatzes 3 noch Abstand vom Sperrring 5 hat. Am Außenumfang des Sperrrings 5 ist eine von dessen schiefen Ebenen 59 sichtbar, die beim weiteren Verschieben des Filtereinsatzes 3 nach unten mit den hier nicht sichtbaren schiefen Ebenen 39 am Innenumfang der Stirnscheibe 31 zusammenwirken.

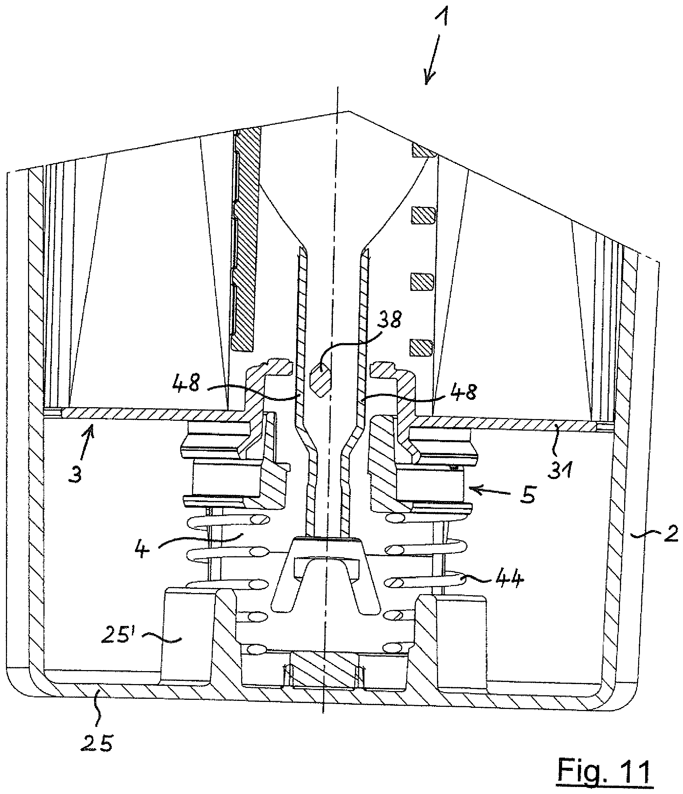

Figur 11 zeigt den Filtereinsatz 3 aus Figur 9 und 10 in einem noch weiter in das Filtergehäuse 2 eingeführten Zustand, in einem Teil-Längsschnitt durch den unteren Filterbereich mit zu der Schnittebene von Figur 10 paralleler Schnittebene. Der Filtereinsatz 3 mit seiner unteren Stirnscheibe 31 steht nun unmittelbar vor einen Kontakt mit dem Sperrring 5, die sich auch jetzt noch in seiner Ausschubstellung befindet. Das am Filtereinsatz 3 vorhandene Positionierführungsmittel 38 befindet sich zwischen den axial verlaufenden Abschnitten der Positionierführungsmittel 48 des Standrohrs 4, die weiter nach unten ihrem Abstand verkleinern, um die endgültige Positionierung des Filtereinsatzes 3 zu bewirken.

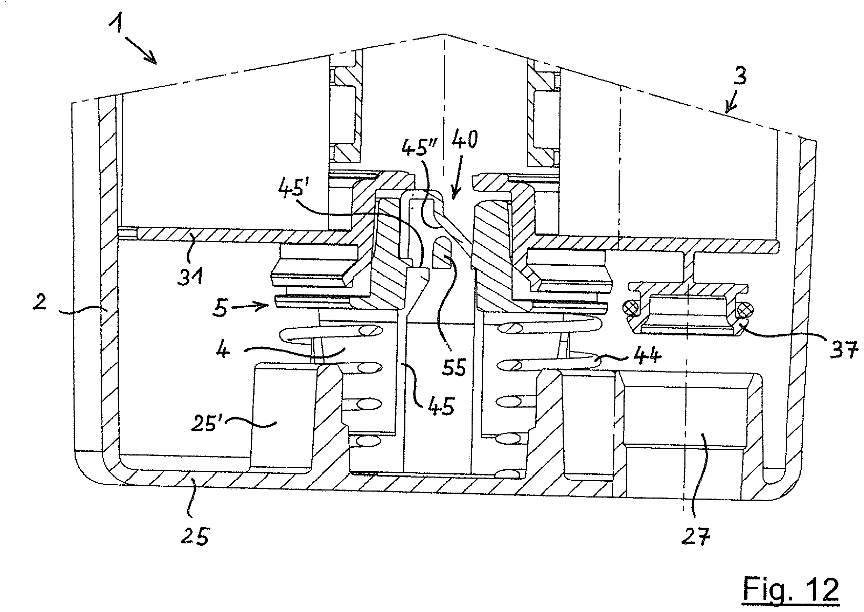

In Figur 12 ist der Filtereinsatz 3 aus Figur 9 bis 11 in einem nochmals weiter in das Filtergehäuse 2 des Filters 1 eingeführten Zustand, in einem Teil-Längsschnitt durch den unteren Filterbereich dargestellt, wobei der Schnitt nun so gelegt ist, dass die Führungskontur 45 auf dem Außenumfang des Standrohrs 4 dem Betrachter zugewandt ist und dass der Schnitt durch den Entleerungskanal 27 geht. Der Filtereinsatz 3 ist nun soweit auf dem Standrohr 4 nach unten verschoben, dass die untere Stirnscheibe 31 mit dem Sperrring 5 in Eingriff getreten ist. Durch die in Figur 12 nicht sichtbaren, zusammenwirkenden schiefen Ebenen 39 und 59 ist die Riegeleinrichtung 40 durch ein gewisses Verdrehen des Sperrrings 5 relativ zum Standrohr 4 entriegelt. In diesem entriegelten Zustand liegt die Führungsnase 55 des Sperrrings 5 in Umfangsrichtung versetzt zur Sperrstufe 45' der Führungskontur 45. Die Sperrung ist somit aufgehoben und Filtereinsatz 3 kann zusammen mit dem in Anlage an ihm befindlichen Sperrring 5 gegen die Kraft der Feder 44 weiter nach unten bewegt werden, wobei diese Bewegung nach unten auch hier vorzugsweise mittels des Aufschraubens eines Deckels 21 auf das Filtergehäuse 2 erfolgt.

Rechts in Figur 12 ist an der Unterseite der Stirnscheibe 31 der mit dieser einstückig ausgeführte Verschlussdorn 37 sichtbar, der nun durch die Führung mittels der Positionierführungsmittel 38 und 48 seine zu dem Entleerungskanal 27 eingriffsgerechte Position erreicht hat. Eine Verdrehung des Filtereinsatzes 3 mit dem Verschlussdorn 37 relativ zum Entleerungskanal 27 ist jetzt aufgrund der Führung des Filtereinsatzes 3 mittels der Positionierführungsmittel 38 und 48, die in Figur 12 nicht sichtbar sind, nicht mehr möglich.

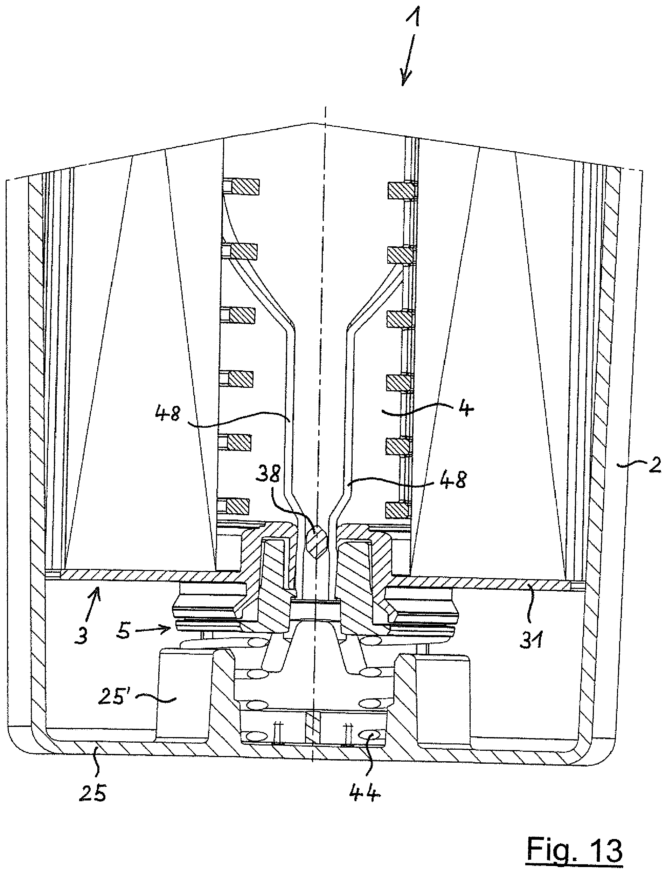

Figur 13 zeigt den Filtereinsatz 3 in einem nochmals weiter in das Filtergehäuse 2 des Filters 1 eingeführten Zustand, in einem Teil-Längsschnitt durch den unteren Filterbereich, wobei der Schnitt hier so gelegt ist, dass nun wieder die Positionierführungsmittel 48 auf dem Außenumfang des Standrohrs 4 dem Betrachter zugewandt sind. Durch das weitere axiale Verschieben des Filtereinsatzes 3 nach unten ist nun dessen Positionierführungsmittel 38 in denjenigen Bereich der Positionierführungsmittel 48 gelangt, in dem diese mit einem in Umfangsrichtung gesehen geringen Abstand in Axialrichtung verlaufen. Dabei ist der Abstand zwischen den Positionierführungsmitteln 48 so gering, dass das darin geführte Positionierführungsmittel 38 des Filtereinsatzes 3 gerade noch ein ausreichendes Bewegungsspiel hat. Zugleich ist der Sperrring 5 durch den weiter nach unten bewegten Filtereinsatz 3 auf dem Standrohr 4 gegen die Kraft der Feder 44 weiter nach unten verschoben.

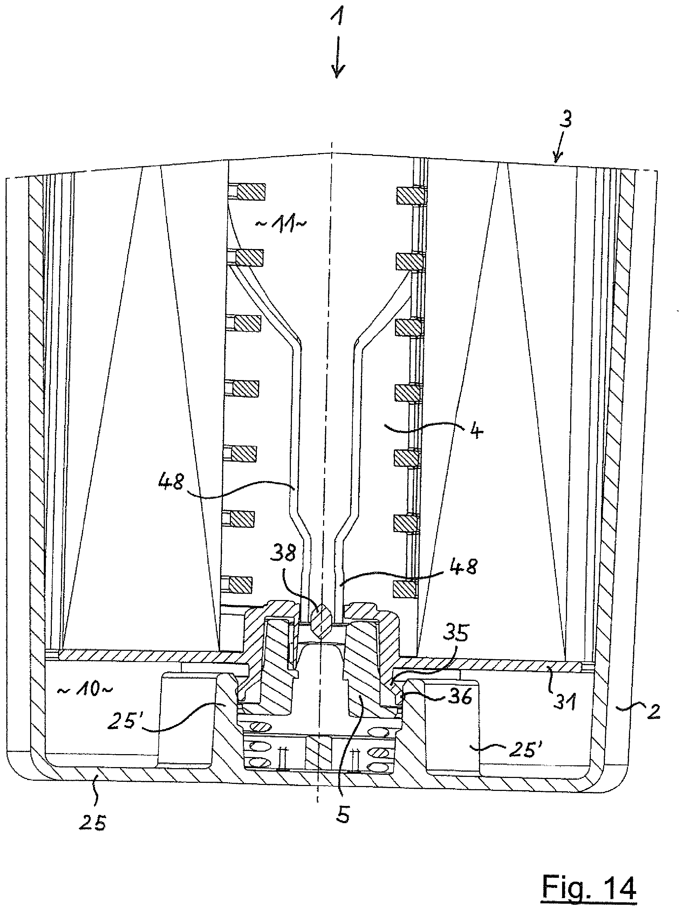

Figur 14 zeigt den Filtereinsatz 3 aus Figur 9 bis 13 in einem vollständig in das Filtergehäuse 3 des Filters 1 eingeführten Zustand, in einem ersten Teil-Längsschnitt durch den unteren Filterbereich. Der Sperrring 5 greift nun in den hohlzylindrischen Bodenteil 25' ein, ebenso der ringförmige Fortsatz 35 mit dem Dichtring 36. Das Positionierführungsmittel 38 des Filtereinsatzes 3 befindet sich nun am unteren Ende der Positionierführungsmittel 48. Somit ist nun nach dem Anbringen des Deckels 21 der Filter 1 betriebsbereit.

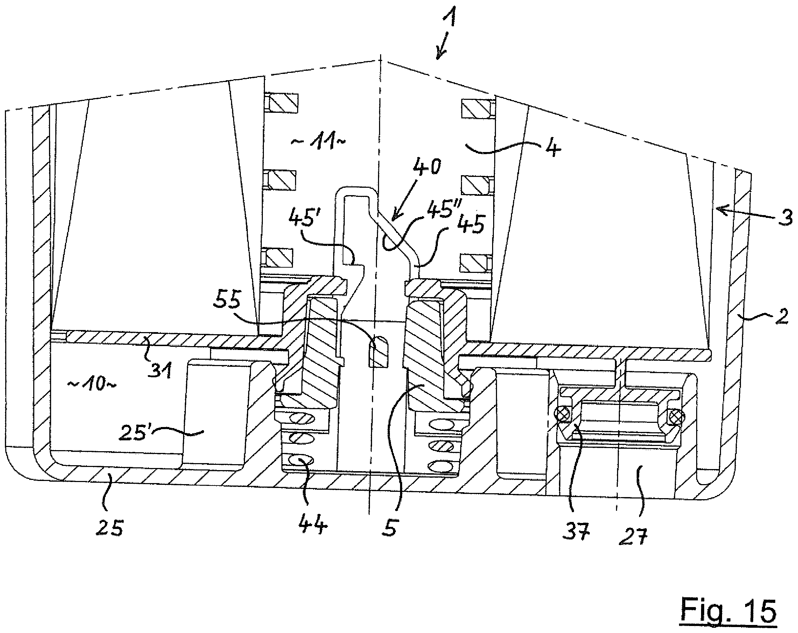

Figur 15 zeigt den Filtereinsatz aus Figur 14 ebenfalls in seinem vollständig in den Filter 1 eingeführten Zustand, in einem zweiten Teil-Längsschnitt durch den unteren Filterbereich, wobei hier die Schnittebene gegenüber der in Figur 14 um 90° gedreht ist. Hier fällt der Blick wieder auf den Bereich des Außenumfangs des Standrohrs 4 mit der Riegeleinrichtung 40 und der zugehörigen Führungskontur 45. Die Führungsnase 55 des Sperrrings 5 liegt nun in Umfangsrichtung und in Axialrichtung zu der Sperrstufe 45' versetzt, was gleichbedeutend mit der Entriegelungsstellung der Riegeleinrichtung 40 ist. Der Verschlussdorn 37 liegt nun dichtend im oberen Endbereich des Entleerungskanals 27, wodurch keine Flüssigkeit mehr aus dem Inneren des Filtergehäuses 2 in den Entleerungskanal 27 fließen kann.

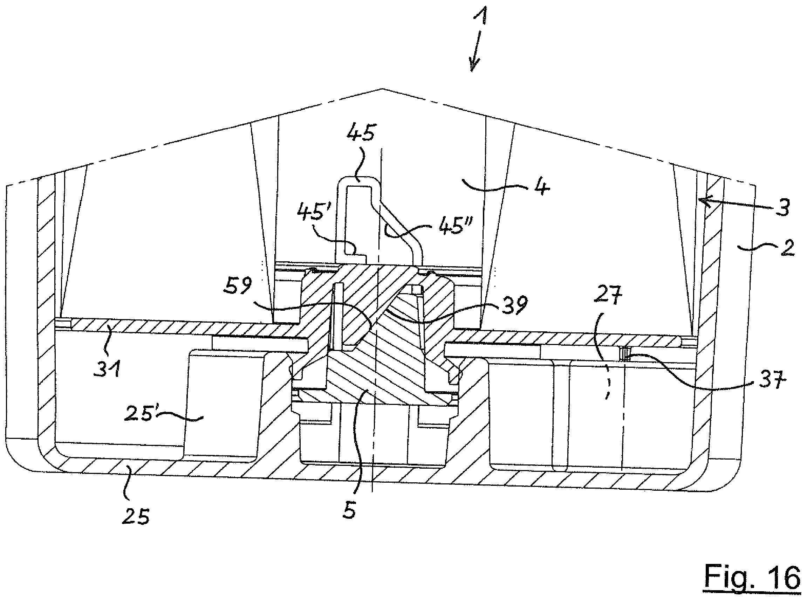

In der Figur 16 ist der Filtereinsatz 3 aus Figur 14 und 15 wieder in seinem vollständig in den Filter 1 eingeführten Zustand, in einem dritten, zum vorhergehenden Teil-Längsschnitt parallel nach vorne versetzten Längsschnitt dargestellt, so dass nun die Schnittebene durch je eine der schiefen Ebenen 39 und 59 am Filtereinsatz 3 und am Sperrring 5 verläuft. Die schiefen Ebenen 39 und 59 stehen nun in vollem Eingriff miteinander, was bedeutet, dass der jetzt vollständig in das Gehäuse 2 eingeführte Filtereinsatz 3 durch seine axiale Bewegung den Sperrring 5 um einen gewissen, für die Entriegelung der Riegeleinrichtung 40 ausreichenden Winkel in Umfangsrichtung verdreht hat. Der Entleerungskanal 27 mit dem dichtend darin liegenden Verschlussdorn 37 liegt nun rechts unten in Figur 16 hinter der Schnittebene.

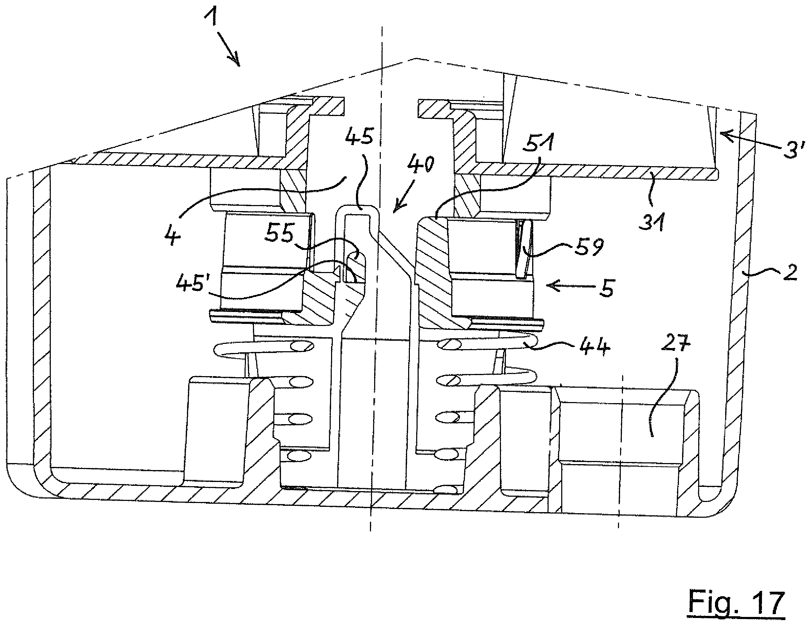

Figur 17 zeigt ein Beispiel für einen nicht passenden Fremd-Filtereinsatz 3', der in den Filter nach Figur 9 bis 16 teilweise eingesetzt ist, in einem Längsschnitt, der so gelegt ist, dass der Außenumfang des Standrohrs 4 mit der Riegeleinrichtung 40 dem Betrachter zugewandt ist. Der Fremd-Filtereinsatzes 3' drückt hier mit seiner unteren Stirnscheibe 31 den Sperrring 5 über dessen Oberkante 51 in Axialrichtung nach unten, jedoch wird eine weitere Bewegung nach unten gesperrt, weil nach einem kurzen Bewegungsweg die Führungsnase 55 des Sperrrings 5 auf die Sperrstufe 45' der Führungskontur 45 trifft, denn der hier dargestellte Fremd-Filtereinsatz 3' besitzt nicht die für das Entriegeln der Riegeleinrichtung 40 nötigen Mittel, insbesondere nicht die notwendigen schiefen Ebenen 39. Somit wirkt hier auf die schiefen Ebenen 59 des Sperrrings 5 keine in Umfangsrichtung weisende Kraft ein, was dazu führt, dass der Sperrring 5 seine Verriegelungsposition beibehält.

Da der Fremd-Filtereinsatz 3' nicht vollständig in das Gehäuse 2 eingeführt werden kann, wird auch keine Trennung zwischen Rohseite und Reinseite des Filters 1 durch den Fremd-Filtereinsatz 3' erreicht und kann der Deckel des Gehäuses 2 nicht angebracht werden. Schließlich fehlt auch der Verschlussdorn für den Entleerungskanal 37 bei dem Fremd-Filtereinsatz 3', so dass mit diesem der Filter 1 nicht betriebsfähig gemacht werden kann.

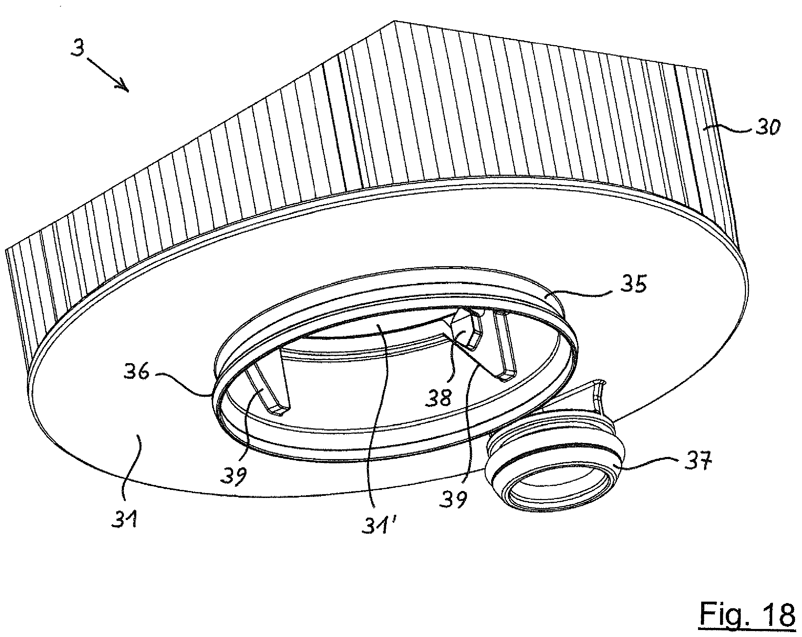

Figur 18 schließlich zeigt den Filtereinsatz gemäß Figur 9 bis 16 in Ansicht schräg von unten, wobei hier nur der untere Teil des Filtereinsatzes 3 dargestellt ist. Es ist ersichtlich, dass der Filterstoffkörper 30 unten von der unteren Stirnscheibe 31 abgedeckt ist, die im Wesentlichen identisch mit der Stirnscheibe 31 gemäß Figur 8 ausgeführt ist. Zusätzlich besitzt die Stirnscheibe 31 nach Figur 18 den exzentrisch angeordneten Verschlussdorn 37, der hier einstückig mit der Stirnscheibe 31 ausgeführt ist. Durch einen auf den Verschlussdorn 37 aufgesetzten separaten Dichtring aus einem Elastomer oder Gummi kann die Dichtwirkung optimiert werden.

Aufgrund seiner speziellen Merkmale und seiner damit erzielten funktionalen Eigenschaften ist der Filtereinsatz 3 für die Verwendung in dem darauf abgestimmten Filter 1 ausgebildet, um insbesondere einen Ersatz des Filtereinsatzes 3 durch ungeeignete, die vorstehend beschriebenen und in ihrem Zusammenwirken mit dem Filter erläuterten speziellen Merkmale nicht aufweisende Fremd-Filtereinsätze zu verhindern.

### Bezugszeichenliste

- 1: Filter
- 10: Rohseite
- 11: Reinseite

- 2: Filtergehäuse
- 21: Deckel
- 22: Verschraubung
- 23: Dichtung in 22
- 24: Rastzungen an 21
- 25: Boden von 2
- 25': hohlzylindrischer Bodenteil
- 26: Dichtfläche in 25'
- 27: Entleerungskanal
- 28: Ringspalt

- 3: Filtereinsatz
- 3': Fremd-Filtereinsatz
- 30: Filterstoffkörper
- 30': Stützgitter in 30
- 31: erste (untere) Stirnscheibe
- 31': Durchbrechung in 31
- 32: zweite (obere) Stirnscheibe
- 33: Entriegelungsmittel (Rippen)
- 34: Rastzungen an 32
- 35: ringförmiger Fortsatz an 31
- 36: Dichtung an 35
- 37: Verschlussdorn für 27
- 38: Positionierführungsmittel an 3
- 39: schiefe Ebenen an 31

- 4: Standrohr
- 40: Riegeleinrichtung
- 41: Sperrzungen
- 41': Sperrfläche
- 42: Flüssigkeitsablaufkanal in 4
- 43: Nocken an 41
- 44: Feder
- 44': Federabstützung
- 45: Führungskontur für 5
- 45': Sperrstufe
- 45": Führungsschräge
- 46: unteres Ende von 4
- 48: Positionierführungsmittel an 4

- 5: Sperrring
- 51: Oberkante
- 51': Unterkante
- 54: Federabstützung
- 55: Führungsnase an 5
- 59: schiefe Ebenen an 5

## Patentansprüche

1. Filtergehäuse (2) mit einer eine Dichtfläche (26) und einem zentralen Standrohr (4), um auf das Standrohr (4) ein Filtereinsatz (3) nach Anspruch 2 mit dessen durchbrochener Stirnscheibe (31) voran aufzustecken, wobei
(a) auf dem Standrohr (4) ein Sperrring (5) axial verschiebbar geführt ist,
(b) der Sperrring (5) mit einer in zum freien Ende des Standrohrs (4) weisender Ausschubrichtung wirkenden Kraft vorbelastet ist,
(c) der Sperrring (5) eine Ausschubstellung hat, in der er durch eine Riegeleinrichtung (40) gegen ein Einschieben gesperrt ist,
(d) die Riegeleinrichtung (40)
i) in einer Entriegelungsrichtung betätigbar ist und
ii) derart angeordnet ist, dass die Riegeleinrichtung (40) beim Aufschieben des Filtereinsatzes nach Anspruch 2 durch die von dem Filtereinsatz (3) geführten Entriegelungsmittel (33) in der Entriegelungsrichtung betätigt wird,
(e) die Riegeleinrichtung (40) und der Sperrring derart zueinander angeordnet sind, dass eine Betätigung der Entriegelungseinrichtung in Entriegelungsrichtung ein Einschieben des Sperrrings (5) und des Filtereinsatzes (3) freigibt,
**dadurch gekennzeichnet, dass**
(f) bei in Ausschubstellung befindlichem Sperrring (5) und in axialer Anlage am Sperrring (5) befindlichem Filtereinsatz (3) nach Anspruch 2 die an der Stirnscheibe (31) des Filtereinsatzes (3) vorgesehene Dichtung (36) des Filtereinsatzes (3) nach Anspruch 2 in Ausschubrichtung von der zugehörigen Dichtfläche (26) des Filtergehäuses (2) axial entfernt und durch die Riegeleinrichtung (40) in einer von der Dichtfläche (26) entfernten, nicht dichtenden Position gehalten ist, und
(g) bei in Einschubstellung befindlichem Filtereinsatz (3) nach Anspruch 2 bei entriegelter Riegeleinrichtung (40) die Dichtfläche (26) und die Dichtung (36) des Filtereinsatzes (3) nach Anspruch 2 dichtend zusammenwirken, wobei sie eine Rohseite (10) und eine Reinseite (11) eines Filters (1) voneinander trennen, und
(h) am Außenumfang des Standrohrs (4) Positionierführungsmittel (48) vorgesehen sind, wobei die Positionierführungsmittel derart ausgebildet sind, dass die Positionierführungsmittel (48) mit den am Innenumfang des Filtereinsatzes (3) nach Anspruch 2 angeordneten Führungsmitteln (38) zusammenwirken.

2. Filtereinsatz (3) zum Aufstecken auf das Standrohr (4) des Filtergehäuses (2) nach Anspruch 1, wobei
(i) der Filtereinsatz (3) aus einem hohlzylindrischen Filterstoffkörper (30) und zwei diesen stirnseitig einfassenden Stirnscheiben (31, 32) besteht, von denen eine Stirnscheibe (31) eine zentrale Durchbrechung (31') aufweist, wobei
(ii) der Filtereinsatz (3) mit der durchbrochenen Stirnscheibe (31) voran auf das Standrohr (4) aufsteckbar ist
(iii) mit dem Filtereinsatz (3) geführte Entriegelungsmittel (33) vorgesehen sind, um bei einem Aufstecken des Filtereinsatzes (3) auf das Standrohr (4) die Riegeleinrichtung (40) des Filtergehäuses (2) nach Anspruch 1 in Entriegelungsrichtung zu betätigen und ein vollständiges Aufstecken des Filtereinsatzes (3) freizugeben,
(iv) die Entriegelungsmittel (33) durch radial nach innen vorragende Rippen gebildet sind, und
(v) an der durchbrochenen Stirnscheibe (31) eine Dichtung (36) vorgesehen ist, um im Zusammenwirken mit einer Dichtfläche (26) des Filtergehäuses (2) nach Anspruch 1 eine Rohseite (10) und eine Reinseite (11) des Filters (1) voneinander zu trennen,
**dadurch gekennzeichnet, dass**
(vi) bei in Ausschubstellung befindlichem Sperrring (5) des Filtergehäuses (2) nach Anspruch 1 und in axialer Anlage am Sperrring (5) befindlichem Filtereinsatz (3) die an der Stirnscheibe (31) des Filtereinsatzes (3) vorgesehene Dichtung (36) in Ausschubrichtung von der zugehörigen Dichtfläche (26) des Filtergehäuses (2) nach Anspruch 1 axial entfernt und durch die Riegeleinrichtung (40) des Filtergehäuses (2) nach Anspruch 1 in der von der Dichtfläche (26) des Filtergehäuses (2) nach Anspruch 1 entfernten, nicht dichtenden Position gehalten ist, und
(vii) dass bei in Einschubstellung befindlichem Filtereinsatz (3) und Sperrring (5) bei entriegelter Riegeleinrichtung (40) des Filtergehäuses (2) nach Anspruch 1 die Dichtfläche (26) des Filtergehäuses (2) nach Anspruch 1 und die Dichtung (36) dichtend zusammenwirken, und
(viii) am Filtereinsatz (3) zusätzlich Führungsmittel (38) angeordnet sind, wobei die Führungsmittel (38) derart ausgestaltet sind, dass sie zum Zusammenwirken mit den am Außenumfang des Standrohrs (4) angeordneten Positionierführungsmitteln (48) des Filtergehäuses (2) nach Anspruch 1 ausgebildet sind, um mittels der Positionierführungsmittel (48) beim Aufstecken des Filtereinsatzes (3) auf das Standrohr (4) des Filtergehäuses (2) nach Anspruch 1 an dem Filtereinsatz (3) angeordneten oder angeformten Entriegelungsmittel (33) in Umfangsrichtung in eine für die Entriegelung der Riegeleinrichtung (40) eingriffsgerechte Stellung zwangszuführen und dann den Filtereinsatz (3) gegen Verdrehen in Umfangsrichtung zu sperren, und
(ix) die Entriegelungsmittel (33) an der die Durchbrechung (31') aufweisenden Stirnscheibe (31) des Filtereinsatzes (3) angeordnet oder angeformt sind,
(x) sich von der durchbrochenen Stirnscheibe (31) ein zentraler ringförmiger Fortsatz (35), der die Durchbrechung (31') umgibt und der die Dichtung (36) trägt, in Einbaulage nach unten erstreckt, und
(xi) die Führungsmittel (38) am Innenumfang des Fortsatzes (35) angeordnet sind.

3. Filtereinsatz (3) nach Anspruch 2, **dadurch gekennzeichnet, dass** zur Bildung eines Filterumgehungsventils eine Stirnscheibe (31) einen Ventilsitz (63) für einen filtergehäuseseitigen, mit einer in Ventilschließrichtung wirkenden Kraft vorbelasteten Ventilkörper aufweist.

4. Filtereinsatz (3) nach einem der Ansprüche 2 bis 3, **dadurch gekennzeichnet, dass** der Filtereinsatz (3) einen Verschlussdorn (37) für einen in einem Boden (25) des Filtergehäuses (2) nach Anspruch 1 exzentrisch angeordneten Entleerungskanal (27) aufweist, und dass der Verschlussdorn (37) exzentrisch an der vom Filterstoffkörper (30) abgewandten Seite der dem Boden (25) zugewandten Stirnscheibe (31) axial vorsteht und dass am Innenumfang des Filtereinsatzes (3) und am Außenumfang des Standrohrs (4) zusammenwirkende Positionierführungsmittel (38, 48) vorgesehen sind, die beim Aufstecken des Filtereinsatzes (3) auf das Standrohr (4) den Filtereinsatz (3) in Umfangsrichtung in eine für den Entleerungskanal (27) eingriffsgerechte Stellung des Verschlussdorns (37) zwangsführen.

## Claims

1. Filter housing (2) with a sealing surface (26) and a central standpipe (4) for pushing a filter insert (3) according to claim 2 with its through hole comprising end plate (31) first onto the standpipe (4), wherein
(a) a locking ring (5) is guided on the standpipe (4) in an axially displaceable manner,
(b) the locking ring (5) is preloaded with a force acting in the extension direction pointing towards the free end of the standpipe (4),
(c) the locking ring (5) has an extension position, in which it is blocked by a locking device (40) against pushing-in,
(d) the locking device (40)
i) can be actuated in an unlocking direction and
ii) is arranged such that by pushing-on the filter insert according to claim 2, the locking device (40) is actuated in the unlocking direction by the unlocking means (33) which is guided by the filter insert (3),
(e) the locking device (40) and the locking ring are arranged to each other in such a manner that an actuation of the unlocking device in unlocking direction enables pushing-in of the locking ring (5) and the filter insert (3),
**characterized in that**
(f) with the locking ring (5) in extension position and with the filter insert (3) according to claim 2 axially abutting the locking ring (5), the sealing (36) of the filter insert (3) according to claim 2 being provided at the end plate (31) of the filter insert (3), is axially remote in the extension direction from the associated sealing surface (26) of the filter housing (2) and is held in a non-sealing position remote from the sealing surface (26) by the locking device (40), and
(g) with the filter insert (3) according to claim 2 being in pushed-in position, with unlocked locking device (40), the sealing surface (26) and the sealing (36) of the filter insert (3) according to claim 2 cooperate in a sealing manner, wherein they separate a raw side (10) and a clean side (1) of a filter, and
(h) positioning guidance means (48) are provided on the outer circumference of the standpipe (4), wherein the positioning guidance means are formed such that the positioning guidance means (48) cooperate with the guiding means (38) arranged at the inner circumference of the filter insert (3) according to claim 2.

2. Filter insert (3) for being pushed onto the standpipe (4) of the filter housing (2) according to claim 1, wherein
(i) the filter insert (3) consists of a hollow cylindrical filter material body (30) and two end plates (31, 32) enclosing the filter material body at the front side, wherein one end plate (31) has a central through hole (31'), wherein
(ii) the filter insert (3) can be pushed onto the standpipe (4) with its through hole comprising pend plate (31) first
(iii) guided unlocking means (33) are provided with the filter insert (3), in order to actuate, upon pushing the filter insert (3) onto the standpipe (4), the locking means (40) of the filter insert (2) according to claim 1 in unlocking direction and enable complete pushing-on of the filter insert (3),
(iv) the unlocking means (33) are formed by ribs protruding radially inwards, and
(v) a sealing (36) is provided at the through hole comprising end plate (31), in order to separate a raw side (10) and a clean side (11) of the filter (1) in cooperation with a sealing surface (26) of the filter housing (2) according to claim 1,
**characterized in that**
(vi) with the locking ring (5) of the filter housing (2) according to claim 1 in extension position and with the filter insert (3) axially abutting the locking ring (5), the sealing (36) provided at the end plate (31) of the filter insert (3) is axially remote in extension direction from the associated sealing surface (26) of the filter housing (2) according to claim 1 and is held in a non-sealing position remote from the sealing surface (26) of the filter housing (2) according to claim 1 by the locking device (40) of the filter housing (2) according to claim 1, and
(vii) that with the filter insert (3) and locking ring (5) being in pushed-in position, with unlocked locking device (40) of the filter housing (2) according to claim 1, the sealing surface (26) of the filter housing (2) according to claim 1 and the sealing (36) cooperate in a sealing manner, and
(viii) guiding means (38) are additionally arranged at the filter insert (3), wherein the guiding means (38) are embodied such that they are formed to cooperate with the positioning guidance means (48) of the filter housing (2) according to claim 1 arranged on the outer circumference of the standpipe (4), in order to positively guide, upon pushing the filter insert (3) onto the standpipe (4) of the filter housing (2) according to claim 1, by means of the positioning guidance means (48), the unlocking means (33) arranged or formed at the filter insert (3) in circumferential direction into a position that is appropriate to engage for unlocking the locking device (40), and then block the filter insert (3) against rotating in circumferential direction, and
(ix) the unlocking means (33) are arranged or formed at the end plate (31) of the filter insert (3) comprising the through hole (31'),
(x) a central ring-shaped protrusion (35) extends in installation position downwards from the through hole comprising end plate (31), which protrusion surrounds the through hole (31') and supports the sealing (36), and
(xi) the guiding means (38) are arranged at the inner circumference of the protrusion (35).

3. Filter insert (3) according to claim 2, **characterized in that** in order to form a filter bypass valve, an end plate (31) has a valve seat (63) for a valve body on the filter housing side, wherein the valve body is preloaded with a force acting in the valve closing direction.

4. Filter insert (3) according to one of claims 2 to 3, **characterized in that** the filter insert (3) has a closing mandrel (37) for an emptying channel (27) eccentrically located in a bottom (25) of the filter housing (2) according to claim 1, and that the closing mandrel (37) eccentrically protrudes axially at the side facing away from the filter material body (30) of the end plate (31) facing towards the bottom (25), and that cooperating positioning guidance means (38, 48) are provided at the inner circumference of the filter insert (3) and the outer circumference of the standpipe (4), which positioning guidance means positively guide - upon pushing the filter insert (3) onto the standpipe (4) - the filter insert (3) in circumferential direction into a position of the closing mandrel (37) that is appropriate to engage for the emptying channel (27).

## Revendications

1. Corps de filtre (2) muni d'une surface d'étanchéité (26) et d'un tube plongeur (4) central, pour emboîter sur le tube plongeur (4) un insert de filtre (3) selon la revendication 2 avec son disque frontal (31) perforé en avant, dans lequel
(a) une bague d'arrêt (5) est guidée avec possibilité de translation axiale sur le tube plongeur (4),
(b) la bague d'arrêt (5) est précontrainte sous une force agissant dans un sens d'éjection orienté vers l'extrémité libre du tube plongeur (4),
(c) la bague d'arrêt (5) a une position d'éjection dans laquelle elle est bloquée par un dispositif de verrouillage (40) de façon à empêcher une insertion,
(d) le dispositif de verrouillage (40)
i) peut être actionné dans un sens de déverrouillage et
ii) est disposé de telle manière que, lorsque l'insert de filtre selon la revendication 2 est emboîté, le dispositif de verrouillage (40) est actionné par le moyen de déverrouillage (33) guidé par l'insert de filtre (3) dans le sens de déverrouillage,
(e) le dispositif de verrouillage (40) et la bague d'arrêt sont disposés l'un par rapport à l'autre de telle manière qu'un actionnement du dispositif de déverrouillage dans le sens de déverrouillage autorise une insertion de la bague d'arrêt (5) et de l'insert de filtre (3),
**caractérisé en ce que**
(f) quand la bague d'arrêt (5) se trouve dans la position d'éjection et l'insert de filtre (3) selon la revendication 2 se trouve en appui axial sur la bague d'arrêt (5), le joint (36) de l'insert de filtre (3) selon la revendication 2 prévu sur le disque frontal (31) de l'insert de filtre (3) s'éloigne dans le sens axial de la surface d'étanchéité (26) correspondante du corps de filtre (2) dans le sens d'éjection et est retenu par le dispositif de verrouillage (40) dans une position éloignée de la surface d'étanchéité (26) où il n'assure pas l'étanchéité, et
(g) quand l'insert de filtre (3) selon la revendication 2 se trouve dans la position d'insertion, lorsque le dispositif de verrouillage (40) est déverrouillé, la surface d'étanchéité (26) et le joint (36) de l'insert de filtre (3) selon la revendication 2 coopèrent pour assurer l'étanchéité en séparant un côté brut (10) et un côté purifié (11) d'un filtre (1), et
(h) des moyens de guidage en position (48) sont prévus sur la circonférence extérieure du tube plongeur (4), lesquels moyens de guidage en position (48) sont conformés de telle manière que les moyens de guidage en position (48) coopèrent avec les moyens de guidage (38) disposés sur la circonférence intérieure de l'insert de filtre (3) selon la revendication 2.

2. Insert de filtre (3) à emboîter sur le tube plongeur (4) du corps de filtre (2) selon la revendication 1, dans lequel
(i) l'insert de filtre (3) se compose d'un corps en tissu filtrant (30) en forme de cylindre creux et de deux disques frontaux (31, 32) renfermant celui-ci sur les faces frontales, avec un disque frontal (31) présentant une perforation centrale (31'),
(ii) l'insert de filtre (3) peut être emboîté sur le tube plongeur (4) avec le disque frontal (31) perforé en avant,
(iii) des moyens de déverrouillage (33) guidés avec l'insert de filtre (3) sont prévus pour actionner le dispositif de verrouillage (40) du corps de filtre (2) selon la revendication 1 dans le sens du déverrouillage lorsque l'insert de filtre (3) est emboîté sur le tube plongeur (4) et autoriser l'emboîtement complet de l'insert de filtre (3),
(iv) les moyens de déverrouillage (33) sont formés par des nervures qui dépassent vers l'intérieur dans le sens radial et
(v) un joint (36) est prévu sur le disque frontal (31) perforé pour séparer un coté brut (10) d'un côté purifié (11) du filtre (1), en coopération avec une surface d'étanchéité (26) du corps de filtre (2) selon la revendication 1,
**caractérisé en ce que**
(vi) quand la bague d'arrêt (5) du corps de filtre (2) selon la revendication 1 se trouve dans la position d'éjection et l'insert de filtre (3) se trouve en appui axial sur la bague d'arrêt (5), le joint (36) prévu sur le disque frontal (31) de l'insert de filtre (3) s'éloigne dans le sens d'éjection de la surface d'étanchéité (26) correspondante du corps de filtre (2) dans le sens axial et est retenu par le dispositif de verrouillage (40) du corps de filtre (2) dans une position éloignée de la surface d'étanchéité (26) du corps de filtre (2) dans laquelle il n'assure pas l'étanchéité, et
(vii) quand l'insert de filtre (3) et la bague d'arrêt (5) se trouvent dans la position d'insertion, lorsque le dispositif de verrouillage (40) du corps de filtre (2) selon la revendication 1 est déverrouillé, la surface d'étanchéité (26) du corps de filtre (2) selon la revendication 1 et le joint (36) coopèrent pour assurer l'étanchéité, et
(viii) des moyens de guidage (38) supplémentaires sont disposés sur l'insert de filtre (3), lesquels moyens de guidage (38) sont conformés de façon à coopérer avec les moyens de guidage en position (48) du corps de filtre (2) selon la revendication 1 disposés sur la circonférence extérieure du tube plongeur (4), afin de guider de force des moyens de déverrouillage (33) disposés ou formés sur l'insert de filtre (3) dans une position correcte pour le déverrouillage du dispositif de verrouillage (40) lors de l'emboîtement de l'insert de filtre (3) sur le tube plongeur (4) du corps de filtre (2) selon la revendication 1, au moyen des moyens de guidage en position (48), et de bloquer ensuite l'insert de filtre (3) pour empêcher sa rotation dans le sens de la circonférence, et
(ix) les moyens de déverrouillage (33) sont disposés ou formés sur le disque frontal (31) de l'insert de filtre (3) présentant la perforation (31'),
(x) une saillie annulaire centrale (35), qui entoure la perforation (31') et porte le joint (36), s'étend à partir du disque frontal (31) perforé vers le bas dans la position d'installation , et
(xi) les moyens de guidage (38) sont disposés sur la circonférence intérieure de la saillie (35).

3. Insert de filtre (3) selon la revendication 2, **caractérisé en ce qu'**afin de former une soupape de contournement du filtre, un disque frontal (31) comporte un siège de soupape (63) pour un corps de soupape disposé sur côté du corps de filtre et soumis à une force de précontrainte agissant dans le sens de la fermeture de la soupape.

4. Insert de filtre (3) selon l'une des revendications 2 à 3, **caractérisé en ce que** l'insert de filtre (3) comporte un mandrin de fermeture (37) pour un canal de vidange (27) disposé dans une position excentrée dans un fond (25) du corps de filtre (2) selon la revendication 1, et **en ce que** le mandrin de fermeture (37) dépasse dans le sens axial dans une position excentrée sur le côté opposé au corps de tissu filtrant (30) du disque frontal (31) tourné vers le fond (25) et **en ce que** sont prévus sur la circonférence intérieure de l'insert de filtre (3) et sur la circonférence extérieure du tube plongeur (4) des moyens de guidage en position (38, 48) qui coopèrent ensemble et qui guident en force l'insert de filtre (3) lors de l'emboîtement de l'insert de filtre (3) sur le tube plongeur (4) dans le sens de la circonférence vers une position du mandrin de fermeture (37) permettant qu'il se mette en prise dans le canal de vidange (27).
